(19) **Europäisches Patentamt / European Patent Office / Office européen des brevets**

(11) **EP 4 173 925 B1**

(12) **EUROPEAN PATENT SPECIFICATION**

(45) Date of publication and mention
of the grant of the patent:
**19.03.2025  Bulletin 2025/12**

(21) Application number: **21218264.6**

(22) Date of filing: **30.12.2021**

(51) International Patent Classification (IPC):
**B61L 15/00** (2006.01)    **B61L 27/50** (2022.01)
**G06Q 10/04** (2023.01)    **G05B 23/02** (2006.01)

(52) Cooperative Patent Classification (CPC):
**B61L 15/0081; B61L 27/50; G05B 23/024; G06Q 10/04**

(54) **METHOD, DEVICE AND STORAGE MEDIUM FOR PREDICTING REMAINING SERVICE LIFE OF RAIL TRANSIT HARDWARE DEVICE**

VERFAHREN, VORRICHTUNG UND SPEICHERMEDIUM ZUR VORHERSAGE DER RESTLEBENSDAUER EINER EISENBAHNVERKEHRS-HARDWARE-VORRICHTUNG

PROCÉDÉ, DISPOSITIF ET SUPPORT D'INFORMATIONS PERMETTANT DE PRÉDIRE LA DURÉE DE VIE RESTANTE D'UN DISPOSITIF MATÉRIEL DE TRANSIT FERROVIAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2021  CN 202111253264**

(43) Date of publication of application:
**03.05.2023  Bulletin 2023/18**

(73) Proprietor: **Traffic Control Technology Co., Ltd.**
**Beijing 100070 (CN)**

(72) Inventors:
• **ZHAO, Jingyi**
**Fengtai District, Beijing, 100070 (CN)**
• **YU, Yingang**
**Fengtai District, Beijing, 100070 (CN)**

(74) Representative: **Grey, Ian Michael et al**
**Venner Shipley LLP**
**200 Aldersgate**
**London EC1A 4HD (GB)**

(56) References cited:
**CN-A- 105 653 851**

• **MISHRA MADHAV ET AL: "Particle filter-based prognostic approach for railway track geometry", MECHANICAL SYSTEMS AND SIGNAL PROCESSING, ELSEVIER, AMSTERDAM, NL, vol. 96, 22 April 2017 (2017-04-22), pages 226 - 238, XP085008739, ISSN: 0888-3270, DOI: 10.1016/J.YMSSP.2017.04.010**
• **BUTLER SHANE: "Prognostic Algorithms for Condition Monitoring and Remaining Useful Life Estimation", THESIS NATIONAL UNIVERSITY OF IRELAND, 1 September 2012 (2012-09-01), pages 1 - 255, XP055888220, Retrieved from the Internet <URL:https://mural.maynoothuniversity.ie/3994/1/Thesis_SButler_wCorrections.pdf> [retrieved on 20220207]**

## Description

### TECHNICAL FIELD

The present application relates to the technical field of rail transit, and in particular to a method, a device and a storage medium for predicting a remaining service life of a rail transit hardware device.

### BACKGROUND

In the existing solutions addressing at the problem of low accuracy in predicting a remaining service life of a hardware device in a rail transit signal system, a statistical model are adopted to predict the remaining service life of the hardware device.

In the method for predicting the remaining service life based on the statistical model, a degradation model can be established according to a degradation trajectory of a product and a probability distribution of the remaining service life of the system can be acquired. A particle filter algorithm is suitable for the prediction of a nonlinear stochastic process with noise, which is widely used in the statistical model method. However, in such method, usually, a fixed state equation is used, which cannot well evaluate the service life of the device in different states in the whole life cycle, thus affecting the accuracy of the service life prediction result.

### SUMMARY

In order to solve at least one of the above technical defects, the present application provides a method, a device and a storage medium for predicting a remaining service life of a rail transit hardware device.

In a first aspect of the present application, a method for predicting a remaining service life of a rail transit hardware device is provided, according to claim 1.

Optionally, the determining particle weights at the moment of prediction on the basis of the state equation for the moment of prediction includes:

determining predicted state values of the particles at the moment of prediction according to the state equation for the moment of prediction;
determining the particle weights at the moment of prediction according to the predicted state values of the particles.

Optionally, the predicting a state value at the moment of prediction according to the particle weights at the moment of prediction and the state equation for the moment of prediction includes:

acquiring observed state values of the particles at a previous moment of the moment of prediction and a state noise at the previous moment of the moment of prediction; and
predicting the state value at the moment of prediction according to the observed state value at the previous moment of the moment of prediction, the state noise at the previous moment of the moment of prediction, the state equation for the moment of prediction and the particle weights at the moment of prediction.

Optionally, the determining the remaining service life of the hardware device based on the state value at the moment of prediction includes:
determining that the remaining service life of the hardware device is a duration from a current moment to the moment of prediction when the state value at the moment of prediction is greater than or equal to a state threshold.

Optionally, the determining the remaining service life of the hardware device based on the state value at the moment of prediction includes:

when the state value at the moment of prediction is less than a state threshold,
determining a state value at a subsequent moment of the moment of prediction on the basis of the state value at the moment of prediction;
when a quotient of the state value at the subsequent moment of the moment of prediction and the initial state value is greater than a third threshold, taking the subsequent moment of the moment of prediction as a moment of prediction, and repeatedly performing the steps of determining a state equation for a moment of prediction from a pre-established multi-stage state variation equation, determining particle weights at the moment of prediction on the basis of the state equation for the moment of prediction, predicting a state value at the moment of prediction according to the particle weights at the moment of prediction and the state equation for the moment of prediction, and determining the remaining service life of the hardware device on the basis of the state value at the moment of prediction;

2

when the quotient of the state value at the subsequent moment of the moment of prediction and the initial state value is less than or equal to the third threshold, determining the state equation for the moment of prediction as a state equation for the subsequent moment of the prediction moment, taking the subsequent moment of the prediction moment as a moment of prediction, and repeatedly performing the steps of determining particle weights at the moment of prediction on the basis of the state equation for the moment of prediction, predicting a state value at the moment of prediction according to the particle weights at the moment of prediction and the state equation for the moment of prediction, and determining the remaining service life of the hardware device on the basis of the state value at the moment of prediction.

Optionally, the determining a state value at a subsequent moment of the moment of prediction on the basis of the state value at the moment of prediction includes:

taking the state value at the moment of prediction as an observed state value at the moment of prediction, and taking the state equation for the moment of prediction as a state equation for the subsequent moment of the moment of prediction;

determining particle weights at the subsequent moment of the moment of prediction on the basis of the observed state value at the moment of prediction;

predicting an initial state value at the subsequent moment of the moment of prediction according to the particle weights at the subsequent moment of the prediction moment and the state equation for the subsequent moment of the prediction moment.

In a second aspect of the present application, an electronic device is provided, according to claim 7.

In a third aspect of the present application, a computer-readable storage medium is provided, according to claim 8.

The present application provides the method, the device and the storage medium for predicting the remaining service life of the rail transit hardware device, where the method includes: generating particles of the hardware device at an initial moment; determining a state equation for a moment of prediction from a pre-established multi-stage state variation equation; determining particle weights at the moment of prediction on the basis of the state equation for the moment of prediction; predicting a state value at the moment of prediction according to the particle weights at the moment of prediction and the state equation for the moment of prediction; and determining the remaining service life of the hardware device on the basis of the state value at the moment of prediction.

In the method provided in the present application, the remaining service life of the hardware device is determined according to the state equation for the moment of prediction, and the state equation for the moment of prediction is determined from a pre-established multi-stage state variation equation, so that the prediction of the remaining service life of the hardware device enables the evaluation of the state variations in multiple stages, ensuring the applicability of the state equation for the moment of prediction to the current working condition of the hardware device. The problem of the low accuracy of state evaluation and service life prediction of the hardware device in the rail transit signal system under varying working conditions is solved, the reliability of the hardware device in the rail transit signal system is improved. The comprehensive security of urban rail transit is improved.

In addition, according to the invention, the multi-stage state variation equation is composed of the state equations of the three-stage, which ensures the applicability of the state equation for the moment of prediction to the current working conditions of the hardware device, solves the problem that the prediction of the remaining service life of the hardware device is highly dependent on the state equation, and the remaining service life of the hardware device can be more accurately predicted.

In addition, in an implementation, the state value at the moment of prediction is predicted according to the weight of each particle at the moment of prediction and the state equation for the moment of prediction. Since the weight of each particle at the moment of prediction ensures the matching of the weight with the current working condition of the hardware device at each moment of prediction, and the state equation for the moment of prediction ensures the applicability of the state equation for the moment of prediction to the current working condition of the hardware device, so that the state value at the moment of prediction obtained according to the weight of each particle at the moment of prediction and the state equation for the moment of prediction more accurately characterizes the real current state of the hardware device.

In addition, in an implementation, the remaining service life of the hardware device is determined to be a duration from the current time to the moment of prediction when the state value at the moment of prediction is greater than or equal to the state threshold. Since the state value at the moment of prediction more accurately characterizes the real current state of the hardware device, the remaining service life of the hardware device obtained according to the state threshold is more accurate, which improves the reliability of the hardware device in the rail transit signal system and improves the comprehensive security of urban rail transit.

In addition, in an implementation, the state equation for the subsequent moment of the moment of prediction is adjusted when the state value at the moment of prediction is less than the state threshold. The state value at the subsequent moment of the moment of prediction is predicted. Then, the remaining service life of the hardware device is determined on the basis of the state value at the subsequent moment of the moment of prediction. Since the final remaining service life of the hardware device is predicted on the basis of the state value at each moment, the determination accuracy of the remaining service life of the hardware device reaches the moment level, and the state equation for each moment and the weights at each moment are adjusted according to the condition of the hardware device at that moment, thereby ensuring the prediction accuracy of the remaining service life of the hardware device.

In addition, in an implementation, the state value at the moment of prediction is taken as the observed state value at the moment of prediction, and the particle weights at the subsequent moment of the moment of prediction are calculated according to the state equation for the moment of prediction and the observed state value at the moment of prediction, thereby obtaining the state value at the subsequent moment of the moment of prediction. The state value of the subsequent moment of the moment of prediction is used for adjusting the state equation for the subsequent moment of the moment of prediction and the weights at the subsequent moment of the moment of prediction, which enables that the state equation for the subsequent moment of the moment of prediction and the weights of the subsequent moment of the moment of prediction are adjusted on the basis of the predicted condition of the moment of prediction. The flexible adjustment of the state equation and weights is ensured, and the prediction accuracy of the remaining service life of the hardware device is ensured.

The present embodiment provides the electronic device in which the computer program is stored in the memory and configured to be executed by the processor to implement the method including the following steps: generating particles of the hardware device at an initial moment; determining a state equation for a moment of prediction from a pre-established multi-stage state variation equation; determining particle weights at the moment of prediction on the basis of the state equation for the moment of prediction; predicting a state value at the moment of prediction according to the particle weights at the moment of prediction and the state equation for the moment of prediction; and determining the remaining service life of the hardware device on the basis of the state value at the moment of prediction. The remaining service life of the hardware device is determined according to the state equation for the moment of prediction, and the state equation for the moment of prediction is determined from a pre-established multi-stage state variation equation, so that the prediction of the remaining service life of the hardware device enables the evaluation of the state variations in multiple stages, ensuring the applicability of the state equation for the moment of prediction to the current working condition of the hardware device. The problem of the low accuracy of state evaluation and service life prediction of the hardware device in the rail transit signal system under varying working conditions is solved, the reliability of the hardware device in the rail transit signal system is improved. The comprehensive security of urban rail transit is improved.

The present embodiment provides the computer-readable storage medium having the computer program stored thereon, where the computer program, when being executed by the processor, implements the method including the following steps: generating particles of the hardware device at an initial moment; determining a state equation for a moment of prediction from a pre-established multi-stage state variation equation; determining particle weights at the moment of prediction on the basis of the state equation for the moment of prediction; predicting a state value at the moment of prediction according to the particle weights at the moment of prediction and the state equation for the moment of prediction; and determining the remaining service life of the hardware device on the basis of the state value at the moment of prediction. The remaining service life of the hardware device is determined according to the state equation for the moment of prediction, and the state equation for the moment of prediction is determined from a pre-established multi-stage state variation equation, so that the prediction of the remaining service life of the hardware device enables the evaluation of the state variations in multiple stages, ensuring the applicability of the state equation for the moment of prediction to the current working condition of the hardware device. The problem of the low accuracy of state evaluation and service life prediction of the hardware device in the rail transit signal system under varying working conditions is solved, the reliability of the hardware device in the rail transit signal system is improved. The comprehensive security of urban rail transit is improved.

## BRIEF DESCRIPTION OF THE DRAWINGS

The drawings, which are illustrated herein to provide a further understanding of the present application, constitute a part of the present application. Illustrative embodiment(s) of the present application and together with the accompanying description serve to explain the present application and do not constitute an undue limitation of the present application. In the drawings:

Fig. 1 is a schematic flowchart of a method for predicting a remaining service life of a rail transit hardware device according to an embodiment of the present application.
Fig. 2 is a schematic diagram illustrating a change process of a state value of a rail transit hardware device according to an embodiment of the present application.

Fig. 3 is a schematic diagram of estimation of a remaining service life of a hardware device in a rail transit signal system according to an embodiment of the present application.

Fig. 4 is a schematic flowchart of another method for predicting a remaining service life of a rail transit hardware device according to an embodiment of the present application.

Fig. 5 is a schematic flowchart of another method for predicting a remaining service life of a rail transit hardware device a according to an embodiment of the present application.

Fig. 6 is a schematic diagram illustrating the effect of another method for predicting a remaining service life of a rail transit hardware device according to an embodiment of the present application.

**DETAILED DESCRIPTION**

In order to make the technical solutions and advantages of the embodiments of the present application clearer, the exemplary embodiments of the present application are described in further detail below with reference to the drawings. Obviously, the described embodiments are only a part of the embodiments of the present application, and not all embodiments are exhaustive.

In implementing the present application, the inventors have noticed that existing solutions use a statistical model to predict the remaining service life of a hardware device. In the statistical model-based method for predicting the remaining service life, a degradation model can be established according to the degradation trajectory of the product and a probability distribution of the remaining service life of the system can be established. A particle filter algorithm is suitable for the prediction of a nonlinear stochastic process with noise, which is widely used in the statistical model-based method. However, in such method, usually, a fixed state equation is used, which cannot well evaluate the service life of the device in different states in the whole life cycle, thus affecting the accuracy of the service life prediction result.

Addressing the above-mentioned problems, the embodiments of the present application provide a method for predicting a remaining service life of a rail transit hardware device, where the method includes: generating particles of the hardware device at an initial moment; determining a state equation for a moment of prediction from a pre-established multi-stage state variation equation; determining particle weights at the moment of prediction on the basis of the state equation for the moment of prediction; predicting a state value at the moment of prediction according to the particle weights at the moment of prediction and the state equation for the moment of prediction; and determining the remaining service life of the hardware device on the basis of the state value at the moment of prediction. In the method provided in the present application, the remaining service life of the hardware device is determined according to the state equation for the moment of prediction, and the state equation for the moment of prediction is determined from a pre-established multi-stage state variation equation, so that the prediction of the remaining service life of the hardware device enables the evaluation of the state variations in multiple stages, ensuring the applicability of the state equation for the moment of prediction to the current working condition of the hardware device. The problem of the low accuracy of state evaluation and service life prediction of the hardware device in the rail transit signal system under varying working conditions is solved, the reliability of the hardware device in the rail transit signal system is improved. The comprehensive security of urban rail transit is improved.

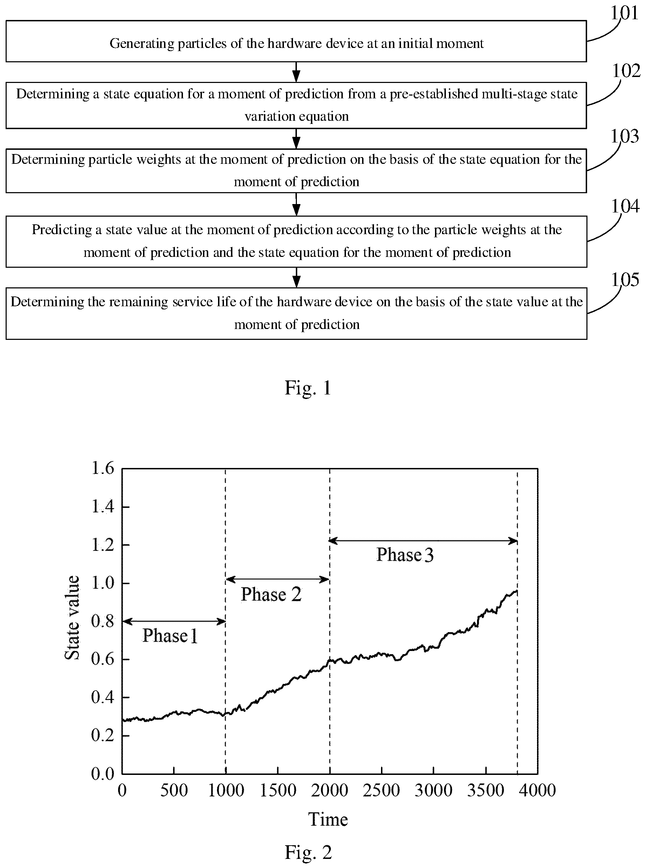

With reference to Fig. 1, a method for predicting a remaining service life of a rail transit hardware device is provided according to an embodiment, which is implemented as follows.

At 101, particles of the hardware device at an initial moment are generated.

The particles at the initial moment may be obtained based on historical state data of the hardware device.

At 102, a state equation for a moment of prediction is determined from a pre-established multi-stage state variation equation.

The multi-stage state variation equation is obtained in advance according to a change process of the state value of the hardware device. Fig. 2 shows the change process of the historical state value of the hardware device in the rail transit signal system, and it can be seen that the change process of the state value can be divided into three stages.

In stage 1, the hardware device state value is substantially non-varying and the degradation slope is substantially zero. Equation (1) is used as the state equation to characterize the degradation law of the hardware device in the rail transit signal system at the initial stage.

$$S_t = S_{t-1} + d_{t-1} \qquad (1).$$

*St is* a state value at a moment *t,* $S_{t-1}$ is a state value at a moment *t* - 1, and $d_{t-1}$ is a state noise at the moment *t* - 1.

In stage 2, the state value of the hardware device change in a linear manner. Equation (2) is used as the state equation to describe the linear degradation of the hardware device in the rail transit signal system.

$$S_t = S_{t-1} + a_{t-1} \cdot \Delta t + d_{t-1} \qquad (2).$$

$a_{t-1}$ is a coefficient, which for the sake of distinction with $b_{t-1}$ will be referred to as a first coefficient, and $\Delta t$ is a time interval between two adjacent moments.

In stage 3, an exponential equation is used to describe the rapid degradation of the hardware device in the rail transit signal system in a later stage.

$$S_t = S_{t-1} \cdot e^{b_{t-1} \cdot \Delta t} + d_{t-1} \qquad (3).$$

$b_{t-1}$ is a coefficient, which for the sake of distinction with $a_{t-1}$ will be referred to as a second coefficient.

Therefore, an increment of the state value of the hardware device in the rail transit signal system may be used as the criterion for switching between state equations. The state value in stage 1 is higher than the initial state value by 0% $\sim e_1$%. The state value in stage 2 is higher than the initial state value by $e_1$%$\sim e_2$%. The state value in stage 3 is higher than the initial state value by $e_2$%$\sim e_3$%. $e_1 < e_2 < e_3$.

Based on the above characteristics, the multi-stage state variation equation for any moment according to the invention is composed of state equations of three stages.

In the state equations:

a state equation of a first stage for any moment is established on the basis of a state value at a previous moment and a state noise at the previous moment;

a state equation of a second stage for any moment is established on the basis of a state value at a previous moment, a state noise at the previous moment, a first coefficient at the previous moment, and a time interval between two adjacent moments;

a state equation of a third stage for any moment is established on the basis of a state value at a previous moment, a state noise at the previous moment, a second coefficient at the previous time, and a time interval between two adjacent moments.

A moment $t$ is taken as an example for illustration, and

the state equation of the first stage is: $S_t = S_{t-1} + d_{t-1}$;
the state equation of the second stage is: $S_t = S_{t-1} + a_{t-1} \cdot \Delta t + d_{t-1}$; and
the state equation of the third stage is: $S_t = S_{t-1} \cdot e^{b_{t-1} \cdot \Delta t} + d_{t-1}$.

$S_t$ is a state value at a moment $t$ - 1, $t$ is a moment identifier, $S_{t-1}$ is a state value at the moment $t$ - 1, $d_{t-1}$ is a state noise at the moment $t$ - 1, $a_{t-1}$ is a first coefficient at the moment $t$ - 1, $b_{t-1}$ is a second coefficient at the moment $t$ - 1, $\Delta t$ is a time interval between two adjacent moments.

The multi-stage state variation equation according to the invention is composed of the state equations of the three-stages, which ensures the applicability of the state equation for the moment of prediction to the current working condition of the hardware device, and solves the problem that the prediction of the remaining service life of the hardware device is strongly dependent on the state equation, so that the remaining service life of the hardware device can be predicted more accurately.

In addition, after the multi-stage state variation equation is established, the state equation for the moment of prediction can be determined according to the characteristics of the change process of the state value of the hardware device.

That is to say, the increment of the state value of the hardware device in the rail transit signal system may be taken as the criterion for switching between the state equations. The state value in the first state is higher than the initial state value by 0%$\sim e_1$%, the state value of the second stage is higher than the initial state value by $e_1$%$\sim e_2$%, and the state value of the third stage is higher than the initial state value by $e_2$%$\sim e_3$%.

The determination of the state equation for the moment of prediction may be performed with the $e_1$% as a first threshold and $e_2$% as a second threshold.

For example, the initial state value and the state value at the previous moment of the moment of prediction are acquired. A ratio is calculated as the ratio = the state value at the previous moment of the moment of prediction / the initial state value. If the ratio is less than the first threshold, the state equation for the moment of prediction is determined to be the state equation of the first stage. If the ratio is between the first threshold and the second threshold (which includes the situation where the ratio is equal to the first threshold or the second threshold), the state equation for the moment of prediction is determined to be the state equation of the second stage. If the ratio is greater than the second threshold, the state equation for the moment of prediction is determined to be the state equation of the third stage.

The solution for determining the state equation for the moment of prediction provided in this embodiment realizes the dynamic determination of the state equation according to the statistical characteristics of the service life of the hardware device, which ensures the applicability of the state equation for the moment of prediction to the current working condition of the hardware device, so that the remaining service life of the hardware device can be more accurately predicted.

At 103, particle weights at the moment of prediction are determined according to the state equation for the moment of prediction.

The particle weights are the weights of the particles. The particle weights at the moment of prediction are the weight of the particles at the moment of prediction.

In this step, predicted state values of the particles at the moment of prediction are determined according to the state equation for the moment of prediction. The particle weights at the moment of prediction are determined on the basis of the predicted state values of the particles.

Since the particles are multiple, the predicted state value of each particle at the moment of prediction is determined according to the state equation for the moment of prediction as follows: $\hat{S}_k^i = h\left(S_{k-1}^i, d_{k-1}\right)$ .

The weight of each particle at the moment of prediction is determined on the basis of the predicted value of the particle state as follows: $w_k^i \propto w_{k-1}^i \cdot P\left(S_k \mid \hat{S}_k^i\right)$ .

$k$ is the moment of prediction, $k$ - 1 is the previous moment of the moment of prediction, $h\left(S_{k-1}^i, d_{k-1}\right)$ is the state equation for the moment $k$, $i$ is a particle identifier, $S_{k-1}^i$ is an observed state value of the particle i at the moment $k$ - 1 (that is, an observed value of a state value), $d_{k-1}$ is a state noise at the moment $k$ - 1, P( ) is a conditional probability function, $S_k$ is an observed state value at the moment $k$, and $w_{k-1}^i$ is a weight of the particle $i$ at the moment $k$ - 1. P( ) is also obtained according to the change process of the historical state value of the hardware device in the rail transit signal system.

In this embodiment, the weight of each particle at the moment of prediction is determined according to the state equation for the moment of prediction, which ensures the matching of the weight with the current working condition of the hardware device at each moment of prediction, so that the remaining service life of the hardware device can be predicted more accurately.

At 104, a state value at the moment of prediction is predicted according to the particle weights at the moment of prediction and the state equation for the moment of prediction.

The observed state values of the particles at the previous moment of the moment of prediction and the state noise at the previous moment of the moment of prediction are acquired.

The state value at the moment of prediction is predicted on the basis of the observed state values at the previous moment of the moment of prediction, the state noise at the previous moment of the moment of prediction, the state equation for the moment of prediction, and the particle weights at the moment of prediction.

For example, the state value at the moment of prediction is $\hat{S}_k = \sum_{i=1}^n w_k^i \cdot \hat{S}_k^i$ .

$k$ is the moment of prediction, and $k$ - 1 is the previous moment of the moment of prediction, and $\hat{S}_k^i = h\left(S_{k-1}^i, d_{k-1}\right)$ . $h\left(S_{k-1}^i, d_{k-1}\right)$ is the state equation for the moment $k$, $i$ is the particle identifier, $S_{k-1}^i$ is the observed state value of the particle i at the moment $k$ - 1, $d_{k-1}$ is the state noise at the moment $k$ - 1, $n$ is the total number of the particles, and $w_k^i$ is the weight of the particle i at the moment $k$.

In this step, the state value at the moment of prediction is predicted according to the weight of each particle at the moment of prediction and the state equation for the moment of prediction. Since the weight of each particle at the moment of prediction ensures the matching of the weight with the current working condition of the hardware device at each moment of prediction, and the state equation for the moment of prediction ensures the applicability of the state equation for the moment of prediction to the current working condition of the hardware device, so that the state value at the moment of prediction obtained according to the weight of each particle at the moment of prediction and the state equation for the moment of prediction more accurately characterizes the real current state of the hardware device.

Through the integration of the multi-stage state variation equation and the particle filter method, the prediction of the remaining service life of the hardware device enables the evaluation of the state variation in the multiple stages, which ensures the applicability of the state equation for the moment of prediction to the current working condition of the hardware device, solves the problem of the low accuracy of the state evaluation and the service life prediction of the hardware device in the rail transit signal system under the varying working condition, improves the reliability of the hardware device in the rail transit signal system, and improves the comprehensive security of urban rail transit.

At 105, the remaining service life of the hardware device is determined on the basis of the state value at the moment of prediction.

If the state value at the moment of prediction is greater than or equal to the state threshold, the remaining service life of the hardware device is determined to be a duration from the current time to the moment of prediction.

Since the state value at the moment of prediction more accurately characterizes the real current state of the hardware device, the remaining service life of the hardware device obtained according to the state threshold is more accurate, which improves the reliability of the hardware device in the rail transit signal system and improves the comprehensive security of urban rail transit.

When the state value at the moment of prediction is greater than or equal to the state threshold, the remaining service life of the hardware device is determined to be the duration from the current time to the moment of prediction. Since the state value at the moment of prediction more accurately characterizes the real current state of the hardware device, the remaining service life of the hardware device obtained according to the state threshold is more accurate, which improves the reliability of the hardware device in the rail transit signal system and improves the comprehensive security of the urban rail transit.

If the state value at the moment of prediction is less than the state threshold, a state value at a subsequent moment of the moment of prediction is determined on the basis of the state value at the moment of prediction. When a quotient of the state value at the subsequent moment of the moment of prediction and the initial state value is greater than a third threshold, the subsequent moment of the moment of prediction is taken as a moment of prediction, and the following steps are repeatedly performed: determining a state equation for a moment of prediction from a pre-established multi-stage state variation equation, determining particle weights at the moment of prediction on the basis of the state equation for the moment of prediction, predicting a state value at the moment of prediction according to the particle weights at the moment of prediction and the state equation for the moment of prediction, and determining the remaining service life of the hardware device on the basis of the state value at the moment of prediction (that is, the steps of 102 to 105 are repeatedly performed). When the quotient of the state value at the subsequent moment of the moment of prediction and the initial state value is less than or equal to the third threshold, the state equation for the moment of prediction is determined as a state equation for the subsequent moment of the prediction moment, the subsequent moment of the prediction moment is taken as a moment of prediction, and the following steps are repeatedly performed: determining particle weights at the moment of prediction on the basis of the state equation for the moment of prediction, predicting a state value at the moment of prediction according to the particle weights at the moment of prediction and the state equation for the moment of prediction, and determining the remaining service life of the hardware device on the basis of the state value at the moment of prediction (that is, the steps of 103 to 105 are repeatedly performed).

The third threshold is a state value increment. When the increment between the state value at the subsequent moment of the prediction moment and the initial state value is relatively large (that is, being greater than the third threshold), the state equation for the subsequent moment of the prediction moment is adjusted.

In addition, the process of determining the state value at one time after prediction from the state value at the moment of prediction is as follows: taking the state value at the moment of prediction as an observed state value at the moment of prediction, and taking the state equation for the moment of prediction as a state equation for the subsequent moment of the moment of prediction; determining particle weights at the subsequent moment of the moment of prediction on the basis of the observed state value at the moment of prediction; and predicting a state value at the subsequent moment of the moment of prediction according to the particle weights at the subsequent moment of the prediction moment and the state equation for the subsequent moment of the prediction moment.

When the state value at the moment of prediction is less than the state threshold, the state equation for the subsequent moment of the moment of prediction is adjusted. The state value at the subsequent moment of the moment of prediction is predicted. Then, the remaining service life of the hardware device is determined on the basis of the state value at the subsequent moment of the moment of prediction. Since the final remaining service life of the hardware device is predicted on the basis of the state value at each moment, the determination accuracy of the remaining service life of the hardware device reaches the moment level, and the state equation for each moment and the weights at each moment are adjusted according to the condition of the hardware device at that moment, thereby ensuring the prediction accuracy of the remaining service life of the hardware device.

In addition, the state value at the moment of prediction is taken as the observed state value at the moment of prediction, and the particle weights at the subsequent moment of the moment of prediction are calculated according to the state equation for the moment of prediction and the observed state value at the moment of prediction, thereby obtaining the state value at the subsequent moment of the moment of prediction. The state value of the subsequent moment of the moment of prediction is used for adjusting the state equation for the subsequent moment of the moment of prediction and the weights at the subsequent moment of the moment of prediction, which enables that the state equation for the subsequent moment of the moment of prediction and the weights of the subsequent moment of the moment of prediction are adjusted on the basis of the predicted condition of the moment of prediction. The flexible adjustment of the state equation and weights is ensured, and the prediction accuracy of the remaining service life of the hardware device is ensured.

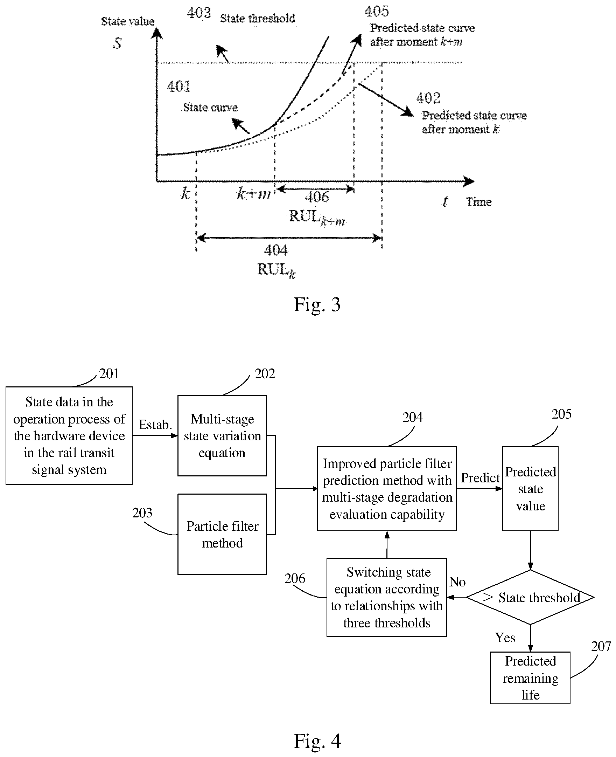

Fig. 3 illustrates a schematic diagram of an estimation of a remaining service life of a hardware device in a rail transit signal system.

401 is a variation curve of the state value of the hardware device. At the moment $k$, with the data of the moment $k$ - 1, the state curve 402 of the hardware device in the rail transit signal system after the moment $k$ may be predicted, and the duration required for the degradation trajectory to reach the state threshold 403 from the moment of time $k$ may be obtained, and this duration is the predicted remaining service life 404 of the hardware device in the rail transit signal system.

Similarly, at the moment $k + m$, with the data of the moment $k + m$ - 1, the state value 405 of the hardware device in the rail transit signal system after the moment $k + m$ may be predicted, and the duration required for the state value to reach the state threshold from the moment k + $m$ is obtained, and this duration is the predicted remaining service life 406 of the hardware device in the rail transit signal system.

The method for predicting the remaining service life of the rail transit hardware device provided in the embodiments is an improved scheme in which the multi-stage state variation equation and the particle filter method are integrated, and is an improved particle filter method. That is, steps 102-105 use the state equation and the observation equation to estimate the state value at the current moment, and the method uses the state equation and the observation equation to estimate the state value at the current time is the particle filtering method.

In the particle filtering method, Equation (4) is a state equation, and Equations (5) and (6) are observation equations. The particle filtering method mainly consists of two steps including prediction and update. Specifically, a Monte Carlo method is used to randomly sample the moment $t$ - 1 to obtain the state $S_{t-1}$. Then, using the state equation (4), the state value $\hat{S}_t$ of each particle at the moment $t$ is predicted. Then, according to the importance sampling principle, according to Equation (5), the weight of each particle in the state estimation values is updated using the observation value $S_t$ at the moment $t$ and normalized. Finally, the optimal estimate of the state value $\hat{S}_t$ at the moment t is obtained by weighted averaging using Equation (6).

$$\hat{S}_t^i = h\big(S_{t-1}^i, d_{t-1}\big) \qquad (4).$$

$$w_t^i \propto w_{t-1}^i \cdot \mathrm{P}\big(S_t | \hat{S}_t^i\big) \qquad (5).$$

$$\hat{S}_t = \sum_{i=1}^n w_t^i \cdot \hat{S}_t^i \qquad (6).$$

In the equations, the symbol ^ at the top of the variables indicates that the variables are estimated or predicted values. $h\big(S_{t-1}^i, d_{t-1}\big)$ is the state equation for the moment $t$, $i$ is the particle identifier, $S_{t-1}^i$ is an observed state value of the particle i at the moment $t$ - 1, $d_{t-1}$ is the state noise at the moment $t$ - 1, P( ) is a conditional probability function, $S_t$ is the observed state value at the moment $t$, $\hat{S}_t^i$ is the predicted state value of the particle i at the moment $t$, $w_{t-1}^i$ is the weight of the particle i at the moment $t$ - 1, and $w_t^i$ is the weight of the particle i at the moment $t$.

In the embodiments, the multi-stage state variation equation is integrated into the particle filter method. That is, three state Equations (1), (2) and (3) of the hardware device in the rail transit signal system are introduced into equation (4). When the state value at a previous moment of the prediction moment is higher than the initial state value by 0%~$e_1$%, the state equation remains the Equation (1). When the state value at a previous moment of the prediction moment is higher than the initial state value by $e_1$%~$e_2$%, the state equation is switched to Equation (2). When the state value at a previous moment of the prediction moment is higher than the initial state value by $e_2$%, the state equation is switched to Equation (3).

The integration of the method for predicting the remaining service life of the rail transit hardware device provided in the embodiments is embodied in the specific implementation process of the method for predicting the remaining service life in the rail transit hardware device shown in Fig. 4, which includes: 1) establishing a multi-stage state variation equation 202 according to the variation law of the state data 201 in the operation process of the hardware device in the rail transit signal system; 2) integrating the multi-stage state variation equation 202 and the particle filter method 203, to make the particle filter method be an improved particle filter prediction method 204 with multi-stage degradation evaluation capability; 3) according to the predicted state value 205 of the hardware device in the rail transit signal system, the applicability of the state equation is evaluated in real time, and the state equation 206 is switched accordingly; 4) the remaining service life 207 is obtained according to the difference between the predicted state value and the state threshold.

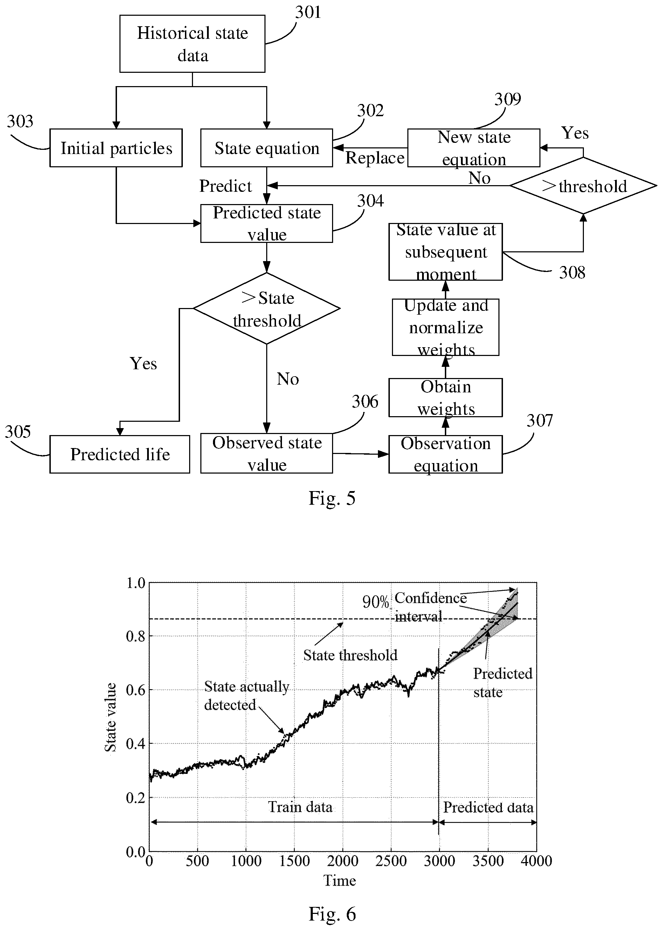

A specific implementation of the method for predicting the remaining service life of the rail transit hardware device provided in the present embodiments can be as shown in Fig. 5. Firstly, a state equation 302 is obtained according to historical state data 301, and particles 303 are generated. Then, the state value 304 at the moment of prediction is predicted using the state equation. Then, it is determined whether the predicted state value exceeds the state threshold. If so, the time required from the moment of prediction to the present is the remaining service life of the device 305. If not, the predicted state value 304 is taken as the state value 306 observed at the moment (that is, the observed state value), and the observation equation 307 is introduced. After the update and normalization of the weights, the state value 308 at the subsequent moment is obtained. It is determined whether the state at the subsequent moment exceeds the threshold. If so, a new state equation 309 is selected for the subsequent moment to replace the current state equation according to the increment by which the state threshold is exceeded. Thereafter, the above steps are repeated for another round of operation.

Fig. 6 illustrates a predicted state curve of the hardware device in the rail transit signal system obtained by using the method for predicting the remaining service life of the rail transit hardware device in the embodiments. When the training data reaches 75%, the predicted state value coincide with the experimentally observed state value at some positions. This indicates that the predicted state value is close to the true result. From the predicted state value, the predicted value of the remaining service life is calculated. The actual remaining service life is calculated by using the actual observed value, and the root mean square error of the predicted remaining service life is 3.46%. It can be seen that, the predicted remaining service life is close to the actual remaining service life.

In addition, the root mean square error of the predicted value of the remaining service life obtained by using the unimproved particle filter method is 8.64%, which is greater than the root mean square error of the predicted value of the remaining service life obtained by using the improved particle filter method provided in the embodiments (that is, the method for predicting the remaining service life of the rail transit hardware device provided in the embodiments), indicating that the prediction result of the remaining service life obtained by the method of predicting the remaining service life of the rail transit hardware device provided in the embodiments is closer to the true value.

The embodiments provide a method for predicting a remaining service life of a rail transit hardware device, where the method includes: generating particles of the hardware device at an initial moment; determining a state equation for a moment of prediction from a pre-established multi-stage state variation equation; determining particle weights at the moment of prediction on the basis of the state equation for the moment of prediction; predicting a state value at the moment of prediction according to the particle weights at the moment of prediction and the state equation for the moment of prediction; and determining the remaining service life of the hardware device on the basis of the state value at the moment of prediction. In the method provided in the present application, the remaining service life of the hardware device is determined according to the state equation for the moment of prediction, and the state equation for the moment of prediction is determined from a pre-established multi-stage state variation equation, so that the prediction of the remaining service life of the hardware device enables the evaluation of the state variations in multiple stages, ensuring the applicability of the state equation for the moment of prediction to the current working condition of the hardware device. The problem of the low accuracy of state evaluation and service life prediction of the hardware device in the rail transit signal system under varying working conditions is solved, the reliability of the hardware device in the rail transit signal system is improved. The comprehensive security of urban rail transit is improved.

Based on the same inventive concept, the embodiments provide an electronic device, including: a memory, a processor, and a computer program.

The computer program is stored in the memory and configured to be executed by a processor to implement the method for predicting the remaining service life of the hardware device rail transit as disclosed in the embodiments shown in Fig. 1.

Specifically, the method includes:

generating particles of the hardware device at an initial moment;
determining a state equation for a moment of prediction from a pre-established multi-stage state variation equation;
determining particle weights at the moment of prediction on the basis of the state equation for the moment of prediction;
predicting a state value at the moment of prediction according to the particle weights at the moment of prediction and the state equation for the moment of prediction;
determining the remaining service life of the hardware device on the basis of the state value at the moment of prediction.

According to the invention, the multi-stage state variation equation is composed of state equations of three stages including a first stage, a second stage and a third stage;
where,

the state equation of the first stage for any moment is established on the basis of a state value at a previous moment and a state noise at the previous moment;

the state equation of the second stage for any moment is established on the basis of a state value at a previous moment, a state noise at the previous moment, a first coefficient at the previous moment and a time interval between two adjacent moments;

the state equation of the third stage for any moment is established on the basis a state value at a previous moment, a state noise at the previous moment, a second coefficient at the previous moment and a time interval between two adjacent times.

According to the invention, the determining a state equation for a moment of prediction from a pre-established multi-stage state variation equation includes:

acquiring an initial state value and a state value at a previous moment of the moment of prediction;

determining that the state equation for the moment of prediction is the state equation of the first stage when a ratio of the state value at the previous moment of the moment of prediction to the initial state value is less than a first threshold;

determining that the state equation for the moment of prediction is the state equation of the second stage when the ratio of the state value at the previous moment of the moment of prediction to the initial state value is between the first threshold and a second threshold;

determining that the state equation for the moment of prediction is the state equation of the third stage when the ratio of the state value at the previous moment of the moment of prediction to the initial state value is greater than the second threshold.

Optionally, the determining particle weights at the moment of prediction on the basis of the state equation for the moment of prediction includes:

determining predicted state values of the particles at the moment of prediction according to the state equation for the moment of prediction;

determining the particle weights at the moment of prediction according to the predicted state values of the particles.

Optionally, the predicting a state value at the moment of prediction according to the particle weights at the moment of prediction and the state equation for the moment of prediction includes:

acquiring observed state values of the particles at a previous moment of the moment of prediction and a state noise at the previous moment of the moment of prediction; and

predicting the state value at the moment of prediction according to the observed state value at the previous moment of the moment of prediction, the state noise at the previous moment of the moment of prediction, the state equation for the moment of prediction and the particle weights at the moment of prediction.

Optionally, where the determining the remaining service life of the hardware device based on the state value at the moment of prediction includes:
determining that the remaining service life of the hardware device is a duration from a current moment to the moment of prediction when the state value at the moment of prediction is greater than or equal to a state threshold.

Optionally, the determining the remaining service life of the hardware device based on the state value at the moment of prediction includes:

when the state value at the moment of prediction is less than a state threshold,

determining a state value at a subsequent moment of the moment of prediction on the basis of the state value at the moment of prediction;

when a quotient of the state value at the subsequent moment of the moment of prediction and the initial state value is greater than a third threshold, taking the subsequent moment of the moment of prediction as a moment of prediction, and repeatedly performing the steps of determining a state equation for a moment of prediction from a pre-established multi-stage state variation equation, determining particle weights at the moment of prediction on the basis of the state equation for the moment of prediction, predicting a state value at the moment of prediction according to the particle weights at the moment of prediction and the state equation for the moment of prediction, and determining the remaining service life of the hardware device on the basis of the state value at the moment of prediction;

when the quotient of the state value at the subsequent moment of the moment of prediction and the initial state value is less than or equal to the third threshold, determining the state equation for the moment of prediction as a state equation for the subsequent moment of the prediction moment, taking the subsequent moment of the prediction moment as a moment of prediction, and repeatedly performing the steps of determining particle weights at the moment of prediction on the basis of the state equation for the moment of prediction, predicting a state value at the moment of prediction according to the particle weights at the moment of prediction and the state equation for the moment of prediction, and determining the remaining service life of the hardware device on the basis of the state value at the moment of prediction.

Optionally, the determining a state value at a subsequent moment of the moment of prediction on the basis of the state value at the moment of prediction includes:

taking the state value at the moment of prediction as an observed state value at the moment of prediction, and taking the state equation for the moment of prediction as a state equation for the subsequent moment of the moment of prediction;
determining particle weights at the subsequent moment of the moment of prediction on the basis of the observed state value at the moment of prediction;
predicting an initial state value at the subsequent moment of the moment of prediction according to the particle weights at the subsequent moment of the prediction moment and the state equation for the subsequent moment of the prediction moment.

The present embodiment provides the electronic device in which the computer program is stored in the memory and configured to be executed by the processor to implement the method including the following steps: generating particles of the hardware device at an initial moment; determining a state equation for a moment of prediction from a pre-established multi-stage state variation equation; determining particle weights at the moment of prediction on the basis of the state equation for the moment of prediction; predicting a state value at the moment of prediction according to the particle weights at the moment of prediction and the state equation for the moment of prediction; and determining the remaining service life of the hardware device on the basis of the state value at the moment of prediction. The remaining service life of the hardware device is determined according to the state equation for the moment of prediction, and the state equation for the moment of prediction is determined from a pre-established multi-stage state variation equation, so that the prediction of the remaining service life of the hardware device enables the evaluation of the state variations in multiple stages, ensuring the applicability of the state equation for the moment of prediction to the current working condition of the hardware device. The problem of the low accuracy of state evaluation and service life prediction of the hardware device in the rail transit signal system under varying working conditions is solved, the reliability of the hardware device in the rail transit signal system is improved. The comprehensive security of urban rail transit is improved.

Based on the same inventive concept, the present embodiment provides a computer-readable storage medium having a computer program stored thereon. The computer program is executed by the processor to implement the method for predicting the remaining service life of the rail transit hardware device as disclosed in the embodiments shown in Fig. 1.

Specifically, the method includes:

generating particles of the hardware device at an initial moment;
determining a state equation for a moment of prediction from a pre-established multi-stage state variation equation;
determining particle weights at the moment of prediction on the basis of the state equation for the moment of prediction;
predicting a state value at the moment of prediction according to the particle weights at the moment of prediction and the state equation for the moment of prediction;
determining the remaining service life of the hardware device on the basis of the state value at the moment of prediction.

According to the invention, the multi-stage state variation equation is composed of state equations of three stages including a first stage, a second stage and a third stage;
where,

the state equation of the first stage for any moment is established on the basis of a state value at a previous moment and a state noise at the previous moment;
the state equation of the second stage for any moment is established on the basis of a state value at a previous moment, a state noise at the previous moment, a first coefficient at the previous moment and a time interval between two adjacent moments;
the state equation of the third stage for any moment is established on the basis a state value at a previous moment, a state noise at the previous moment, a second coefficient at the previous moment and a time interval between two adjacent times.

According to the invention, the determining a state equation for a moment of prediction from a pre-established multi-stage state variation equation includes:

> acquiring an initial state value and a state value at a previous moment of the moment of prediction;
> determining that the state equation for the moment of prediction is the state equation of the first stage when a ratio of the state value at the previous moment of the moment of prediction to the initial state value is less than a first threshold;
> determining that the state equation for the moment of prediction is the state equation of the second stage when the ratio of the state value at the previous moment of the moment of prediction to the initial state value is between the first threshold and a second threshold;
> determining that the state equation for the moment of prediction is the state equation of the third stage when the ratio of the state value at the previous moment of the moment of prediction to the initial state value is greater than the second threshold.

Optionally, the determining particle weights at the moment of prediction on the basis of the state equation for the moment of prediction includes:

> determining predicted state values of the particles at the moment of prediction according to the state equation for the moment of prediction;
> determining the particle weights at the moment of prediction according to the predicted state values of the particles.

Optionally, the predicting a state value at the moment of prediction according to the particle weights at the moment of prediction and the state equation for the moment of prediction includes:

> acquiring observed state values of the particles at a previous moment of the moment of prediction and a state noise at the previous moment of the moment of prediction; and
> predicting the state value at the moment of prediction according to the observed state value at the previous moment of the moment of prediction, the state noise at the previous moment of the moment of prediction, the state equation for the moment of prediction and the particle weights at the moment of prediction.

Optionally, where the determining the remaining service life of the hardware device based on the state value at the moment of prediction includes:
determining that the remaining service life of the hardware device is a duration from a current moment to the moment of prediction when the state value at the moment of prediction is greater than or equal to a state threshold.
Optionally, the determining the remaining service life of the hardware device based on the state value at the moment of prediction includes:

> when the state value at the moment of prediction is less than a state threshold,
> determining a state value at a subsequent moment of the moment of prediction on the basis of the state value at the moment of prediction;
> when a quotient of the state value at the subsequent moment of the moment of prediction and the initial state value is greater than a third threshold, taking the subsequent moment of the moment of prediction as a moment of prediction, and repeatedly performing the steps of determining a state equation for a moment of prediction from a pre-established multi-stage state variation equation, determining particle weights at the moment of prediction on the basis of the state equation for the moment of prediction, predicting a state value at the moment of prediction according to the particle weights at the moment of prediction and the state equation for the moment of prediction, and determining the remaining service life of the hardware device on the basis of the state value at the moment of prediction;
> when the quotient of the state value at the subsequent moment of the moment of prediction and the initial state value is less than or equal to the third threshold, determining the state equation for the moment of prediction as a state equation for the subsequent moment of the prediction moment, taking the subsequent moment of the prediction moment as a moment of prediction, and repeatedly performing the steps of determining particle weights at the moment of prediction on the basis of the state equation for the moment of prediction, predicting a state value at the moment of prediction according to the particle weights at the moment of prediction and the state equation for the moment of prediction, and determining the remaining service life of the hardware device on the basis of the state value at the moment of prediction.

Optionally, the determining a state value at a subsequent moment of the moment of prediction on the basis of the state value at the moment of prediction includes:

taking the state value at the moment of prediction as an observed state value at the moment of prediction, and taking the state equation for the moment of prediction as a state equation for the subsequent moment of the moment of prediction;

determining particle weights at the subsequent moment of the moment of prediction on the basis of the observed state value at the moment of prediction;

predicting an initial state value at the subsequent moment of the moment of prediction according to the particle weights at the subsequent moment of the prediction moment and the state equation for the subsequent moment of the prediction moment.

The present embodiment provides the computer-readable storage medium having the computer program stored thereon, where the computer program, when being executed by the processor, implements the method including the following steps: generating particles of the hardware device at an initial moment; determining a state equation for a moment of prediction from a pre-established multi-stage state variation equation; determining particle weights at the moment of prediction on the basis of the state equation for the moment of prediction; predicting a state value at the moment of prediction according to the particle weights at the moment of prediction and the state equation for the moment of prediction; and determining the remaining service life of the hardware device on the basis of the state value at the moment of prediction. The remaining service life of the hardware device is determined according to the state equation for the moment of prediction, and the state equation for the moment of prediction is determined from a pre-established multi-stage state variation equation, so that the prediction of the remaining service life of the hardware device enables the evaluation of the state variations in multiple stages, ensuring the applicability of the state equation for the moment of prediction to the current working condition of the hardware device. The problem of the low accuracy of state evaluation and service life prediction of the hardware device in the rail transit signal system under varying working conditions is solved, the reliability of the hardware device in the rail transit signal system is improved. The comprehensive security of urban rail transit is improved.

It will be appreciated by one skilled in the art that, the embodiments of the present application can be provided as a method, a system, or a computer program product. Accordingly, the present application may take the form of an entirely hardware embodiment, an entirely software embodiment or an embodiment combining software and hardware aspects. Furthermore, the present application may take the form of a computer program product embodied on one or more computer-usable storage media (including, but not limited to, magnetic disk storage, CD-ROM, optical storage, etc.) having computer-usable program code embodied therein. Schemes in embodiments of the present application may be implemented in a variety of computer languages, such as the object-oriented programming language Java, the transliteration scripting language JavaScript, etc.

The present application is described with reference to flowchart illustrations and/or block diagrams of methods, apparatus (systems), and computer program products according to embodiments of the present application. It will be understood that each flow and/or block of the flowcharts and/or block diagrams, and combinations of flows and/or blocks in the flowcharts and/or block diagrams, can be implemented by computer program instructions. These computer program instructions may be provided to a processor of a general purpose computer, special purpose computer, embedded processor or other programmable data processing apparatus to produce a machine, such that the instructions, which are executed via the processor of the computer or other programmable data processing apparatus, create means for implementing the functions specified in the flowchart flow or flows and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function specified in the flowchart flow or flows and/or block diagram block or blocks.

These computer program instructions may also be loaded onto a computer or other programmable data processing apparatus to cause a series of operational steps to be performed on the computer or other programmable apparatus to produce a computer implemented process such that the instructions which are executed on the computer or other programmable apparatus provide steps for implementing the functions specified in the flowchart flow or flows and/or block diagram block or blocks.

Furthermore, the terms "first" and "second" are used for descriptive purposes only and are not to be construed as indicating or implying relative importance or as implicitly indicating the number of technical features indicated. Thus, a feature defined as "first" or "second" may explicitly or implicitly include one or more of the feature. In the description herein, the meaning of "a plurality" is at least two, for example, two, three, etc., unless specifically defined otherwise.

It will be apparent to those skilled in the art that various modifications and variations can be made in the present application without departing from the gist or scope of the application. Thus, if these modifications and variations of the present application fall within the scope of the claims of the present application, the present application is intended to include these modifications and variations.

**Claims**

1. A computer-implemented method for predicting a remaining service life of a rail transit hardware device, **characterized by** comprising:

   generating (101) particles of the hardware device at an initial moment;
   determining (102) a state equation for a moment of prediction from a pre-established multi-stage state variation equation;
   determining (103) particle weights at the moment of prediction on the basis of the state equation for the moment of prediction;
   predicting (104) a state value at the moment of prediction according to the particle weights at the moment of prediction and the state equation for the moment of prediction;
   determining (105) the remaining service life of the hardware device on the basis of the state value at the moment of prediction,
   wherein the determining (102) the state equation for the moment of prediction from the pre-established multi-stage state variation equation comprises:
   acquiring an initial state value and a state value at a previous moment of the moment of prediction; **characterised by**:

   determining that the state equation for the moment of prediction is a state equation of a first stage when a ratio of the state value at the previous moment of the moment of prediction to the initial state value is less than a first threshold, wherein the state equation of the first stage is established on the basis of the state value at the previous moment of the moment of prediction and a state noise at the previous moment;
   determining that the state equation for the moment of prediction is a state equation of the second stage when the ratio of the state value at the previous moment of the moment of prediction to the initial state value is between the first threshold and a second threshold, wherein the state equation of the second stage is established on the basis of the state value at the previous moment, the state noise at the previous moment, a first coefficient at the previous moment and a time interval between two adjacent moments;
   determining that the state equation for the moment of prediction is a state equation of the third stage when the ratio of the state value at the previous moment of the moment of prediction to the initial state value is greater than the second threshold, wherein the state equation of the third stage is established on the basis the state value at the previous moment, the state noise at the previous moment, a second coefficient at the previous moment and a time interval between two adjacent moments.

2. The computer-implemented method according to claim 1, wherein the determining (103) the particle weights at the moment of prediction on the basis of the state equation for the moment of prediction comprises:

   determining predicted state values of the particles at the moment of prediction according to the state equation for the moment of prediction;
   determining the particle weights at the moment of prediction according to the predicted state values of the particles.

3. The computer-implemented method according to claim 1, wherein the predicting (104) the state value at the moment of prediction according to the particle weights at the moment of prediction and the state equation for the moment of prediction comprises:

   acquiring observed state values of the particles at a previous moment of the moment of prediction and a state noise at the previous moment of the moment of prediction; and
   predicting the state value at the moment of prediction according to the observed state value at the previous moment of the moment of prediction, the state noise at the previous moment of the moment of prediction, the state equation for the moment of prediction and the particle weights at the moment of prediction.

4. The computer-implemented method according to claim 1, wherein the determining (105) the remaining service life of the hardware device based on the state value at the moment of prediction comprises:
   determining that the remaining service life of the hardware device is a duration from a current moment to the moment of prediction when the state value at the moment of prediction is greater than or equal to a state threshold.

5. The computer-implemented method according to claim 1, wherein the determining (105) the remaining service life of the hardware device based on the state value at the moment of prediction comprises:

when the state value at the moment of prediction is less than a state threshold,
determining a state value at a subsequent moment of the moment of prediction on the basis of the state value at the moment of prediction;
when a quotient of the state value at the subsequent moment of the moment of prediction and the initial state value is greater than a third threshold, taking the subsequent moment of the moment of prediction as the moment of prediction, and repeatedly performing the steps of determining the state equation for the moment of prediction from the pre-established multi-stage state variation equation, determining the particle weights at the moment of prediction on the basis of the state equation for the moment of prediction, predicting the state value at the moment of prediction according to the particle weights at the moment of prediction and the state equation for the moment of prediction, and determining the remaining service life of the hardware device on the basis of the state value at the moment of prediction;
when the quotient of the state value at the subsequent moment of the moment of prediction and the initial state value is less than or equal to the third threshold, determining the state equation for the moment of prediction as the state equation for the subsequent moment of the prediction moment, taking the subsequent moment of the prediction moment as the moment of prediction, and repeatedly performing the steps of determining the particle weights at the moment of prediction on the basis of the state equation for the moment of prediction, predicting the state value at the moment of prediction according to the particle weights at the moment of prediction and the state equation for the moment of prediction, and determining the remaining service life of the hardware device on the basis of the state value at the moment of prediction.

6. The computer-implemented method according to claim 5, wherein the determining the state value at the subsequent moment of the moment of prediction on the basis of the state value at the moment of prediction comprises:

taking the state value at the moment of prediction as an observed state value at the moment of prediction, and taking the state equation for the moment of prediction as the state equation for the subsequent moment of the moment of prediction;
determining particle weights at the subsequent moment of the moment of prediction on the basis of the observed state value at the moment of prediction;
predicting an initial state value at the subsequent moment of the moment of prediction according to the particle weights at the subsequent moment of the prediction moment and the state equation for the subsequent moment of the prediction moment.

7. An electronic device comprising:

a memory storing a computer program;
a processor; and
wherein the processor is configured to execute the computer program to implement the method according to any one of claims 1 to 6.

8. A computer-readable storage medium having a computer program stored thereon, wherein the computer program, when executed by a processor, cause the processor to implement the method according to any one of claims 1 to 6.

**Patentansprüche**

1. Computerimplementiertes Verfahren zur Vorhersage der verbleibenden Lebensdauer einer Hardware-Vorrichtung für den Schienenverkehr, **gekennzeichnet durch** die folgenden Schritte:

Erzeugen (101) von Partikeln der Hardware-Vorrichtung zu einem Anfangszeitpunkt;
Bestimmen (102) einer Zustandsgleichung für einen Zeitpunkt der Vorhersage aus einer vorher aufgestellten mehrstufigen Zustandsänderungsgleichung;
Bestimmen (103) von Partikelgewichten zu dem Zeitpunkt der Vorhersage auf der Grundlage der Zustandsgleichung für den Zeitpunkt der Vorhersage;
Vorhersage (104) eines Zustandswertes zum Zeitpunkt der Vorhersage gemäß den Partikelgewichten zum Zeitpunkt der Vorhersage und der Zustandsgleichung für den Zeitpunkt der Vorhersage;
Bestimmen (105) der verbleibenden Lebensdauer der Hardware-Vorrichtung auf der Grundlage des Zustandswertes zum Zeitpunkt der Vorhersage,
wobei das Bestimmen (102) der Zustandsgleichung für den Zeitpunkt der Vorhersage aus der vorher aufgestellten mehrstufigen Zustandsänderungsgleichung umfasst:
Erfassen eines anfänglichen Zustandswertes und eines Zustandswertes zu einem vorhergehenden Zeitpunkt des Zeitpunktes der Vorhersage; **gekennzeichnet durch**:

Bestimmen, dass die Zustandsgleichung für den Zeitpunkt der Vorhersage eine Zustandsgleichung einer ersten Stufe ist, wenn ein Verhältnis des Zustandswertes im vorhergehenden Zeitpunkt des Vorhersagezeitpunkts zu dem anfänglichen Zustandswert kleiner als ein erster Schwellenwert ist, wobei die Zustandsgleichung der ersten Stufe auf der Grundlage des Zustandswertes im vorhergehenden Zeitpunkt und eines Zustandsrauschens im vorhergehenden Zeitpunkt aufgestellt wird;
Bestimmen, dass die Zustandsgleichung für den Zeitpunkt der Vorhersage eine Zustandsgleichung der zweiten Stufe ist, wenn das Verhältnis des Zustandswerts im vorhergehenden Zeitpunkt des Vorhersagezeitpunkts zu dem Anfangszustandswert zwischen dem ersten Schwellenwert und einem zweiten Schwellenwert liegt, wobei die Zustandsgleichung der zweiten Stufe auf der Grundlage des Zustandswerts im vorhergehenden Zeitpunkt, des Zustandsrauschens im vorhergehenden Zeitpunkt, eines ersten Koeffizienten im vorhergehenden Zeitpunkt und eines Zeitintervalls zwischen zwei benachbarten Zeitpunkten aufgestellt wird;
Bestimmen, dass die Zustandsgleichung für den Zeitpunkt der Vorhersage eine Zustandsgleichung der dritten Stufe ist, wenn das Verhältnis des Zustandswertes im vorhergehenden Zeitpunkt des Vorhersagezeitpunkts zu dem Anfangszustandswert größer als der zweite Schwellenwert ist, wobei die Zustandsgleichung der dritten Stufe auf der Grundlage des Zustandswerts im vorhergehenden Zeitpunkt, des Zustandsrauschens im vorhergehenden Zeitpunkt, eines zweiten Koeffizienten im vorhergehenden Zeitpunkt und eines Zeitintervalls zwischen zwei benachbarten Zeitpunkten aufgestellt wird.

2. Computerimplementiertes Verfahren nach Anspruch 1, wobei das Bestimmen (103) von Partikelgewichten zu dem Zeitpunkt der Vorhersage auf der Grundlage der Zustandsgleichung für den Zeitpunkt der Vorhersage umfasst:

Bestimmen von vorhergesagten Zustandswerten der Partikel im Zeitpunkt der Vorhersage gemäß der Zustandsgleichung für den Zeitpunkt der Vorhersage;
Bestimmen der Partikelgewichte im Zeitpunkt der Vorhersage gemäß den vorhergesagten Zustandswerten der Partikel.

3. Computerimplementiertes Verfahren nach Anspruch 1, wobei die Vorhersage (104) des Zustandswertes im Zeitpunkt der Vorhersage gemäß den Partikelgewichten im Zeitpunkt der Vorhersage und der Zustandsgleichung für den Zeitpunkt der Vorhersage umfasst:

Erfassen von beobachteten Zustandswerten der Partikel im Zeitpunkt der Vorhersage und eines Zustandsrauschens im Zeitpunkt der Vorhersage; und
Vorhersage des Zustandswertes im Zeitpunkt der Vorhersage gemäß dem beobachteten Zustandswert im vorherigen Zeitpunkt der Vorhersage, dem Zustandsrauschen im vorherigen Zeitpunkt der Vorhersage, der Zustandsgleichung für den Zeitpunkt der Vorhersage und den Partikelgewichten im Zeitpunkt der Vorhersage.

4. Computerimplementiertes Verfahren nach Anspruch 1, wobei das Bestimmen (105) der verbleibenden Lebensdauer der Hardware-Vorrichtung auf der Grundlage des Zustandswerts im Zeitpunkt der Vorhersage umfasst:
Bestimmen, dass die verbleibende Lebensdauer der Hardware-Vorrichtung eine Dauer von einem aktuellen Zeitpunkt bis zum Zeitpunkt der Vorhersage ist, wenn der Zustandswert im Zeitpunkt der Vorhersage größer oder gleich einer Zustandsschwelle ist.

5. Computerimplementiertes Verfahren nach Anspruch 1, wobei das Bestimmen (105) der verbleibenden Lebensdauer der Hardware-Vorrichtung auf der Grundlage des Zustandswerts im Zeitpunkt der Vorhersage umfasst:

wenn der Zustandswert im Zeitpunkt der Vorhersage kleiner als ein Zustandsschwellenwert ist,
Bestimmen eines Zustandswertes in einem nachfolgenden Zeitpunkt der Vorhersage auf der Grundlage des Zustandswertes im Zeitpunkt der Vorhersage;
wenn ein Quotient aus dem Zustandswert im nachfolgenden Zeitpunkt der Vorhersage und dem Anfangszustandswert größer als ein dritter Schwellenwert ist, Nehmen des nachfolgenden Zeitpunkts der Vorhersage als den Zeitpunkt der Vorhersage, und wiederholtes Durchführen der Schritte des Bestimmens der Zustandsgleichung für den Zeitpunkt der Vorhersage aus der vorher aufgestellten mehrstufigen Zustandsänderungsgleichung, Bestimmen der Partikelgewichte im Zeitpunkt der Vorhersage auf der Grundlage der Zustandsgleichung für den Zeitpunkt der Vorhersage, Vorhersagen des Zustandswertes im Zeitpunkt der Vorhersage gemäß den Partikelgewichten im Zeitpunkt der Vorhersage und der Zustandsgleichung für den Zeitpunkt der Vorhersage, und Bestimmen der verbleibenden Lebensdauer der Hardware-Vorrichtung auf der Grundlage des Zustandswertes im Zeitpunkt der Vorhersage;

wenn der Quotient aus dem Zustandswert im nachfolgenden Zeitpunkt der Vorhersage und dem anfänglichen Zustandswert kleiner oder gleich dem dritten Schwellenwert ist, Bestimmen der Zustandsgleichung für den Zeitpunkt der Vorhersage als die Zustandsgleichung für den nachfolgenden Zeitpunkt der Vorhersage, wobei der nachfolgende Zeitpunkt der Vorhersage als der Zeitpunkt der Vorhersage genommen wird, und wiederholtes Durchführen der Schritte des Bestimmens der Partikelgewichte im Zeitpunkt der Vorhersage auf der Grundlage der Zustandsgleichung für den Zeitpunkt der Vorhersage, des Vorhersagens des Zustandswertes im Zeitpunkt der Vorhersage gemäß den Partikelgewichten im Zeitpunkt der Vorhersage und der Zustandsgleichung für den Zeitpunkt der Vorhersage, und des Bestimmens der verbleibenden Lebensdauer der Hardware-Vorrichtung auf der Grundlage des Zustandswertes im Zeitpunkt der Vorhersage.

6. Computerimplementiertes Verfahren nach Anspruch 5, wobei das Bestimmen des Zustandswerts im nachfolgenden Zeitpunkt des Zeitpunkts der Vorhersage auf der Grundlage des Zustandswerts im Zeitpunkt der Vorhersage umfasst:

Aufnehmen des Zustandswertes im Zeitpunkt der Vorhersage als einen beobachteten Zustandswert im Zeitpunkt der Vorhersage, und Aufnehmen der Zustandsgleichung für den Zeitpunkt der Vorhersage als die Zustandsgleichung für den nachfolgenden Zeitpunkt der Vorhersage;
Bestimmen von Partikelgewichten im nachfolgenden Zeitpunkt der Vorhersage auf der Grundlage des beobachteten Zustandswertes im Zeitpunkt der Vorhersage;
Vorhersage eines Anfangszustandswertes im nachfolgenden Zeitpunkt der Vorhersage gemäß den Partikelgewichten im nachfolgenden Zeitpunkt der Vorhersage und der Zustandsgleichung für den nachfolgenden Zeitpunkt der Vorhersage.

7. Elektronische Vorrichtung umfassend:

einen Speicher, der ein Computerprogramm speichert;
einen Prozessor; und
wobei der Prozessor so konfiguriert ist, dass er das Computerprogramm ausführt, um das Verfahren nach einem der Ansprüche 1 bis 6 zu implementieren.

8. Computerlesbares Speichermedium mit einem darauf gespeicherten Computerprogramm, wobei das Computerprogramm, wenn es von einem Prozessor ausgeführt wird, den Prozessor veranlasst, das Verfahren nach einem der Ansprüche 1 bis 6 durchzuführen.

**Revendications**

1. Procédé à mettre en œuvre par ordinateur pour prédire une durée de vie restante d'un équipement matériel de transport ferroviaire, **caractérisé en ce qu'**il comprend :

générer (101) des particules de l'équipement matériel à un moment initial ;
déterminer (102) une équation d'état pour un moment de prédiction à partir d'une équation de variation d'état à multi-phase qui est préétablie ;
déterminer (103) des poids des particules au moment de prédiction sur la base de l'équation d'état pour le moment de prédiction ;
prédire (104) une valeur d'état au moment de prédiction en fonction des poids des particules au moment de prédiction et de l'équation d'état pour le moment de prédiction ;
déterminer (105) la durée de vie restante de l'équipement matériel sur la base de la valeur d'état au moment de prédiction,
dans lequel l'étape de déterminer (102) l'équation d'état pour le moment de prédiction à partir de l'équation de variation d'état à multi-phase qui est préétablie comprend :
acquérir une valeur d'état initial et une valeur d'état à un moment précédent du moment de prédiction ;
**caractérisé par** :

déterminer que l'équation d'état pour le moment de prédiction est une équation d'état d'une première phase lorsqu'un rapport de la valeur d'état au moment précédent du moment de prédiction à la valeur d'état initial est inférieur à un premier seuil, dans lequel l'équation d'état de la première phase est établie sur la base de la valeur d'état au moment précédent du moment de prédiction et d'un bruit d'état au moment précédent ;

déterminer que l'équation d'état pour le moment de prédiction est une équation d'état de la deuxième phase lorsque le rapport de la valeur d'état au moment précédent du moment de prédiction à la valeur d'état initial est compris entre le premier seuil et un deuxième seuil, dans lequel l'équation d'état de la deuxième phase est établie sur la base de la valeur d'état au moment précédent, du bruit d'état au moment précédent, d'un premier coefficient au moment précédent et d'un intervalle temporel entre deux moments adjacents ;

déterminer que l'équation d'état pour le moment de prédiction est une équation d'état de la troisième phase lorsque le rapport de la valeur d'état au moment précédent du moment de prédiction à la valeur d'état initial est supérieur au deuxième seuil, dans lequel l'équation d'état de la troisième phase est établie sur la base de la valeur d'état au moment précédent, du bruit d'état au moment précédent, d'un deuxième coefficient au moment précédent et d'un intervalle temporel entre deux moments adjacents.

2. Procédé à mettre en œuvre par ordinateur selon la revendication 1, dans lequel l'étape de déterminer (103) les poids des particules au moment de prédiction sur la base de l'équation d'état pour le moment de prédiction comprend :

déterminer des valeurs d'état prédites des particules au moment de prédiction en fonction de l'équation d'état pour le moment de prédiction ;

déterminer les poids des particules au moment de prédiction en fonction des valeurs d'état prédites des particules.

3. Procédé à mettre en œuvre par ordinateur selon la revendication 1, dans lequel l'étape de prédire (104) la valeur d'état au moment de prédiction en fonction des poids des particules au moment de prédiction et de l'équation d'état pour le moment de prédiction comprend :

acquérir des valeurs d'état observées des particules à un moment précédent du moment de prédiction et un bruit d'état au moment précédent du moment de prédiction ; et

prédire la valeur d'état au moment de prédiction en fonction de la valeur d'état observée au moment précédent du moment de prédiction, du bruit d'état au moment précédent du moment de prédiction, de l'équation d'état pour le moment de prédiction et des poids des particules au moment de prédiction.

4. Procédé à mettre en œuvre par ordinateur selon la revendication 1, dans lequel l'étape de déterminer (105) la durée de vie restante de l'équipement matériel sur la base de la valeur d'état au moment de prédiction comprend :

déterminer que la durée de vie restante de l'équipement matériel est une durée d'un moment actuel au moment de prédiction lorsque la valeur d'état au moment de prédiction est supérieure ou égale à un seuil d'état.

5. Procédé à mettre en œuvre par ordinateur selon la revendication 1, dans lequel l'étape de déterminer (105) la durée de vie restante de l'équipement matériel sur la base de la valeur d'état au moment de prédiction comprend :

lorsque la valeur d'état au moment de prédiction est inférieure à un seuil d'état,

déterminer une valeur d'état à un moment suivant du moment de prédiction sur la base de la valeur d'état au moment de prédiction ;

lorsqu'un quotient de la valeur d'état au moment suivant du moment de prédiction divisée par la valeur d'état initial est supérieur à un troisième seuil, prendre le moment suivant du moment de prédiction comme moment de prédiction, et répéter les étapes de déterminer l'équation d'état pour le moment de prédiction à partir de l'équation de variation d'état à multi-phase qui est préétablie, déterminer les poids des particules au moment de prédiction sur la base de l'équation d'état pour le moment de prédiction, prédire la valeur d'état au moment de prédiction en fonction des poids des particules au moment de prédiction et de l'équation d'état pour le moment de prédiction, et déterminer la durée de vie restante de l'équipement matériel sur la base de la valeur d'état au moment de prédiction ;

lorsque le quotient de la valeur d'état au moment suivant du moment de prédiction divisée par la valeur d'état initial est inférieur ou égal au troisième seuil, déterminer l'équation d'état pour le moment de prédiction comme équation d'état pour le moment suivant du moment de prédiction, prendre le moment suivant du moment de prédiction comme moment de prédiction, et répéter les étapes de déterminer les poids des particules au moment de prédiction sur la base de l'équation d'état pour le moment de prédiction, prédire la valeur d'état au moment de prédiction en fonction des poids des particules au moment de prédiction et de l'équation d'état pour le moment de prédiction, et déterminer la durée de vie restante de l'équipement matériel sur la base de la valeur d'état au moment de prédiction.

6. Procédé à mettre en œuvre par ordinateur selon la revendication 5, dans lequel l'étape de déterminer la valeur d'état au moment suivant du moment de prédiction sur la base de la valeur d'état au moment de prédiction comprend :

prendre la valeur d'état au moment de prédiction comme valeur d'état observée au moment de prédiction, et prendre l'équation d'état pour le moment de prédiction comme équation d'état pour le moment suivant du moment de prédiction ;
déterminer des poids des particules au moment suivant du moment de prédiction sur la base de la valeur d'état observée au moment de prédiction ;
prédire une valeur d'état initial au moment suivant du moment de prédiction en fonction des poids des particules au moment suivant du moment de prédiction et de l'équation d'état au moment suivant du moment de prédiction.

7. Équipement électronique, comprenant :

une mémoire stockant un programme informatique ;
un processeur ; et
dans lequel le processeur est configuré pour exécuter le programme informatique afin de mettre en œuvre le procédé selon l'une quelconque des revendications 1 à 6.

8. Support de stockage lisible par ordinateur sur lequel est stocké un programme informatique, dans lequel le programme informatique,
lorsqu'il est exécuté par un processeur, amène le processeur à mettre en œuvre le procédé selon l'une quelconque des revendications 1 à 6.

| Generating particles of the hardware device at an initial moment | 101 |

| Determining a state equation for a moment of prediction from a pre-established multi-stage state variation equation | 102 |

| Determining particle weights at the moment of prediction on the basis of the state equation for the moment of prediction | 103 |

| Predicting a state value at the moment of prediction according to the particle weights at the moment of prediction and the state equation for the moment of prediction | 104 |

| Determining the remaining service life of the hardware device on the basis of the state value at the moment of prediction | 105 |

Fig. 1

Fig. 2

21

Fig. 3

Fig. 4

Fig. 5

Fig. 6